# EUROPÄISCHE PATENTSCHRIFT

(11) **EP 3 102 527 B1**
(45) Veröffentlichungstag und Bekanntmachung des Hinweises auf die Patenterteilung: **08.08.2018**
(21) Anmeldenummer: 15702294.8
(22) Anmeldetag: 04.02.2015
(51) Int. Cl.: B66C 19/00, B60L 11/18, B66C 13/12

(54) **SYSTEM UND KOPPELVORRICHTUNG ZUM AUTOMATISCHEN ANKOPPELN EINER FAHRBAREN MASCHINE, INSBESONDERE EINES CONTAINER-STAPELKRANS, AN EINE FAHRVERSORGUNG, SOWIE KUPPLUNG HIERFÜR**
SYSTEM AND COUPLING DEVICE FOR AUTOMATICALLY COUPLING A MOBILE MACHINE, IN PARTICULAR A CONTAINER-STACKING CRANE, TO A MOBILE CONSUMER SUPPLY SYSTEM, AND A COUPLING THEREFOR
SYSTÈME ET DISPOSITIF D'ACCOUPLEMENT POUR ACCOUPLEMENT AUTOMATIQUE À UN DISPOSITIF D'ALIMENTATION MOBILE, D'UNE MACHINE MOBILE, EN PARTICULIER D'UN PONT ROULANT GERBEUR POUR CONTENEURS ET ACCOUPLEMENT APPROPRIÉ

(30) Priorität: 04.02.2014 DE 202014100481 U
(43) Veröffentlichungstag der Anmeldung: 14.12.2016
(73) Patentinhaber: Igus GmbH, 51147 Köln (DE)
(72) Erfinder: HERMEY, Andreas, 53773 Hennef (DE); BARTEN, Dominik, 53340 Meckenheim (DE); HOWOLD, Philip, 50226 Frechen (DE)
(74) Vertreter: Lippert Stachow Patentanwälte Rechtsanwälte
(86) Internationale Anmeldenummer: PCT/EP2015/052304
(87) Internationale Veröffentlichungsnummer: WO 2015/118014

(56) Entgegenhaltungen:
- WO-A1-2012/130630
- WO-A2-2010/054852
- DE-A1-102008 024 572
- US-A1- 2012 043 291

## Beschreibung

Die Erfindung betrifft generell eine Fahrversorgung, d.h. eine Vorrichtung zur Versorgung eines fahrbaren bzw. beweglichen Verbrauchers, z.B. zur Energieversorgung eines nicht-schienengebundenen Fahrzeugs.

Die Erfindung betrifft besonders ein teil- oder vollautomatisches System zum Ankoppeln einer fahrbaren Maschine an die Fahrversorgung. Die Erfindung betrifft ferner eine Koppelvorrichtung hierfür sowie eine mechanische Kupplung, insbesondere zur Verwendung im gattungsgemäßen System. Sie betrifft auch die Verwendung des Systems zur Elektrifizierung bzw. zur Stromversorgung einer fahrbaren Maschine, wie beispielsweise eines Container-Stapelkrans mit Gummibereifung (engl.: Rubber-Tyre-Gantry-Crane, kurz: RTG).

Die internationale Patentanmeldung WO 2010/054852 A2 offenbart ein System nach dem Oberbegriff aus Anspruch 1. Es eignet sich insbesondere zum automatischen Ankoppeln eines RTG an eine Stromschiene als Fahrversorgung. Dieses System umfasst eine Koppelvorrichtung mit einer Zustelleinheit zum Zustellen in Richtung quer zur Stromschiene mittels eines ausfahrbaren Auslegerarms. Am Endbereich, mit dem der Auslegerarm quer an die Stromschiene zustellbar ist, ist zum Verbinden mit der Stromschiene ein spezieller Rollenschlitten vorgesehen. Der Schlitten hält die zu koppelnden Schleifkontakte in Quer- und Höhenrichtung in der Stromschiene. Der Schlitten ist an zusätzlich vorgesehenen Tragschienen geführt und gehalten.

Ein ähnliches System, speziell zum Ankoppeln eines RTG an eine Stromschiene, beschreibt die Offenlegungsschrift DE 10 2008 024 572 A1. Bei diesem System wird ein teleskopischer Auslegerarm vorgeschlagen der mittels eines besonderen Abnehmerwagens an die Stromschiene gekoppelt wird. Der Abnehmerwagen erlaubt Spiel sowohl vertikal als auch quer zur Fahrtrichtung. So kann eine an sich bekannte Trasse mit Stromschiene auch mit Reifenfahrzeugen, insbesondere mit RTGs, verwendet werden.

Ein weiteres System, ebenfalls speziell zur Stromversorgung eines RTG durch eine Stromschiene, ist aus der internationalen Patentanmeldung WO 2012/130630 A1 bekannt. Dieses soll gegenüber dem System aus WO 2010/054852 A2 den Nachteil einer aufwendigen Einführungsvorrichtung zum Heranführen des Stromabnehmers in die Stromschiene beseitigen. Zu diesem Zweck wird dort eine Koppelvorrichtung gemäß dem Oberbegriff aus Anspruch 11 beschrieben. Diese Koppelvorrichtung hat, neben einer Querzustelleinheit mit quer ausfahrbarem Auslegerarm, zusätzlich eine Höhenzustelleinheit, mit welcher der Endbereich des Auslegerarms auch in der Höhe zustellbar ist.

Ein automatisches Ankoppeln einer fahrbaren Maschine an eine Fahrversorgung zur Stromversorgung ist in vielen Anwendungsfällen wünschenswert. Besonders wirtschaftlich und umweltfreundlich ist die Elektrifizierung von Fahrzeugen, welche einen eigenen Dieselgenerator zum Speisen elektrischer Antriebsmotoren haben. Dies ist z.B. bei Stapelkränen vom Typ RTG meist der Fall. Auch für sogenannte luftbereifte Van-Carrier, die Container meist nur in einer Reihe stapeln können, ist eine Elektrifizierung zur Verminderung des Dieselverbrauchs wünschenswert. RTGs und Van-Carrier werden in Hafenanlagen oder anderen Container-Umschlagplätzen eingesetzt. Die elektrische Versorgung ist auch in anderen Bereichen wünschenswert, etwa im Tage- oder Bergbau, beispielsweise für einen Stacker/Reclaimer.

Bekannte Lösungen beruhen überwiegend auf dem Prinzip einer Stromschiene mit Stromabnehmer als Fahrversorgung. Die Schleifkontakte an der Stromschiene unterliegen naturgemäß einem nicht unwesentlichen Verschleiß. Stromschienen sind robust, aber eher wartungsanfällig bzw. wartungsaufwendig. Auch sind sie nur bedingt geeignet für die Übertragung von Datensignalen. Sie sind zudem ungeeignet für die Versorgung mit anderen Medien, wie gasförmigen oder flüssigen Betriebsmitteln. Eine Lösung mit Stromschiene kann beispielsweise die Wasserzufuhr für die Berieselungsanlage eines Stacker/Reclaimers nicht bereitstellen. Auch Druckluft für luftbereifte Fahrzeuge wie RTGs kann über eine Fahrversorgung nach dem Prinzip einer Stromschiene nicht versorgt werden. Schließlich sind Stromschienen nicht ohne erheblichen Aufwand erweiterbar und grundsätzlich nicht modular einsetzbar.

Eine weitere Lösung ist aus der Patentanmeldung US 2012/043291 A1 bekannt. Bei dieser Lösung wird alternativ zu Stromschienen vorgeschlagen, ein RTG mittels einer Kabeltrommel oder mittels einer Energieführungskette zu versorgen. Zur Einhaltung einer Spur wird neben dem RTG ein schienengebundener Versorgungswagen vorgesehen, welcher die Kabeltrommel aufweist bzw. von der Energieführungskette versorgt wird. Um die Bewegungsfreiheit des RTG nicht zu beeinträchtigten ist der Versorgungswagen über eine spezielle mechanische Koppelung mit dem RTG verbunden, welche großes Vertikalspiel und Querspiel ermöglicht. Die Verbindung der Stromversorgung zwischen Versorgungswagen und RTG erfolgt manuell.

In Anbetracht der vorstehenden Nachteile ist es eine erste Aufgabe der vorliegenden Erfindung, eine Alternative zu bieten, welche insbesondere ohne Stromschienen bzw. zusätzliche Abnehmerwagen oder dergleichen auskommt. Es soll zugleich ein System und eine Koppelvorrichtung zum automatischen Ankoppeln einer fahrbaren Maschine an eine alternative Fahrversorgung vorgeschlagen werden. Diese Aufgaben löst, je nach Spurgenauigkeit der fahrbaren Maschine und/oder Größenordnung möglicher Querkräfte, ein teil- oder vollautomatisches System nach Anspruch 1 oder nach Anspruch 5. Zudem trägt die Koppelvorrichtung nach Anspruch 11 unabhängig zur Lösung bei.

Ein gattungsgemäßes System, besonders für spurgenaue Maschinen und/oder geringe Querkräfte, zeichnet sich erfindungsgemäß in einfachster Umsetzung dadurch aus, dass eine Energieführungskette mit einem Mitnehmer als Fahrversorgung vorgesehen ist, und dass das System einerseits eine mechanische Kupplung zum Verbinden des Auslegerarms mit dem Mitnehmer sowie andererseits eine Leitungskopplung mittels einem Steckverbinder am Auslegerarm und einer entsprechenden Buchse am Mitnehmer aufweist. Die mechanische Kupplung besteht im Wesentlichen aus einem Kupplungsstück am Endbereich des Auslegerarms und einem Kupplungsgegenstück am Mitnehmer, wobei die Kupplungsstücke zur Lagefixierung zusammenwirken. Die Leitungen an der Schnittstelle zwischen Energieführungskette und Koppelvorrichtung werden durch die Steckverbindung aus Steckverbinder und entsprechender Buchse gekoppelt.

Durch den vorgeschlagenen Aufbau wird insbesondere die Verwendung von Energieführungsketten in bewährter Bauweise ermöglicht, obwohl die zu versorgende Maschine nicht zwingend exakt parallel zur Längsrichtung der Energieführungskette hin- und zurückfährt. Die mechanische Kupplung verbindet hierbei den Auslegerarm fest mit dem Mitnehmer der Energieführungskette, die Steckverbindung stellt anschließend oder zeitgleich die Verbindung notwendiger Leitungen, beispielsweise Strom- und Datenversorgungsleitungen, her.

Für fahrbare Maschinen mit größeren Abweichungen zwischen Fahrspur und Längsverlauf der Energieführungskette und/oder größeren Querkräften, sieht eine weitere, unabhängige Lösung ebenfalls vor, dass als Fahrversorgung eine Energieführungskette mit einem Mitnehmer vorgesehen ist, wobei ein Kupplungsstück am Endbereich des Auslegerarms und ein zusammenwirkendes Kupplungsgegenstück am Mitnehmer der Energieführungskette eine mechanische Kupplung bilden. Zum Kompensieren der Abweichungen und/oder Auffangen unerwünschter Querkräfte zeichnet sich diese weitere erfindungsgemäße Lösung allerdings dadurch aus, dass der Mitnehmer eine schwimmende Lagerung für das Kupplungsgegenstück bildet, d.h. letzteres ist mit Querspiel quer zur Energieführungskette schwimmend gelagert.

Je nach Anwendung kann so bereits unerwünschte Querkraft an der Kette vermieden bzw. eine Spurabweichung kompensiert werden, wie beispielsweise bei einem RTG.

Die beiden vorgeschlagenen Systeme erlauben es, eine Energieführungskette - als Alternative zu einer Stromschiene oder Fahrleitung - zur Versorgung eines fahrbaren Verbrauchers zu nutzen.

Eine aufwendige Trasse mit Stromschienen wie in WO 2010/054852 A2, DE 10 2008 024 572 A1 oder in WO 2012/130630 A1 ist nicht erforderlich. Auch ein besonderer Abnehmerwagen wird nicht benötigt. Die hier vorgeschlagenen Systeme kommen, anders als z.B. das System in US 2012/043291 A1, ohne zusätzlichen, spurtreuen Versorgungswagen.

Bei beiden Systemen, insbesondere bei größeren Spurabweichungen, kann es vorteilhaft sein, eine Zustellsteuerung vorzusehen, welche mit einer als Messglied dienenden Detektoranordnung am Mitnehmer einerseits und andererseits mit der Querzustelleinheit der Koppelvorrichtung als Stellglied zusammenwirkt. Hierbei ist die Zustellsteuerung so ausgeführt, dass sie bedarfsweise die Querposition des Endbereichs des Auslegerarms jeweils im Fahrbetrieb entsprechend dem Verlauf der Energieführungskette neu einstellt bzw. nachjustiert, z.B. um das verfügbare Querspiel am Mitnehmer nicht zu überschreiten. Geringe Abweichungen zwischen der Laufrichtung der Energieführungskette und der Fahrbahn können bereits durch eine schwimmende Lagerung kompensiert werden. Ergänzend wird ansonsten die ohnehin vorgesehene Querzustelleinheit ausgenutzt, um größere Abweichungen zu kompensieren, welche die schwimmende Lagerung nicht auffangen kann bzw. um eine kleinere Dimensionierung dieser zu ermöglichen.

Zusammenfassend ermöglicht die Zustellsteuerung die Verwendung einer robusten, bewährten Energieführungskette, insbesondere einer solchen, welche für sich genommen dem Mitnehmer keinen Freiheitsgrad in Querrichtung bietet.

Insbesondere bei einem System ohne Zustellsteuerung ist es vorteilhaft, wenn das System eine Führungsrinne umfasst, in welcher die Energieführungskette ablegbar ist und welche für diese eine Trasse vorgibt bzw. definiert. Die Trasse kann insbesondere weitestgehend geradlinig bzw. linear verlaufen. Der Aufbau geeigneter Führungsrinnen ist an sich bekannt. Diese beschützen insbesondere die Energieführungskette selbst vor unerwünschter Fremdeinwirkung.

Insbesondere bei Anwendungen an der freien Luft ist es vorteilhaft, die Führungsrinne so auszuführen, dass sie einen Witterungsschutz aufweist, beispielsweise in der Art eines Überdachs. In diesem Fall ist ein seitlicher Längsspalt vorzusehen, durch den die Koppelvorrichtung auf den Mitnehmer der Energieführungskette zugreifen kann.

Zur Vermeidung bzw. Reduzierung von Verschleiß ist es ferner vorteilhaft, wenn die Führungsrinne zu beiden Seiten seitliche Gleitleisten aufweist, durch welche der Mitnehmer vorzugsweise etwa mittig in der Führungsrinne geführt ist. Zur Vorgabe einer definierten Halteposition für das automatische Ankoppeln sollen entsprechende Gleitleisten zumindest an einer Haltestelle bzw. Parkposition vorgesehen sein, in welcher der Mitnehmer zum Ankoppeln bzw. beim Abkoppeln abgelegt ist. Der Schutz der geführten Leitungen kann mit einer Energieführungskette, die mittels Deckeln ober- und unterseitig geschlossen ist, erhöht werden, z.B. gemäß Gebrauchsmuster DE 20 2013 101 457 U1 oder Patent DE 39 30 291 C1.

Insbesondere bei einem System ohne schwimmende Lagerung am Mitnehmer und/oder ohne Zustellsteuerung ist es zweckmäßig, wenn die Führungsrinne der Energieführungskette eine mechanische Längsführung für den Mitnehmer, d.h. eine Führung in Längsrichtung der Energieführungskette, bildet und Querkräfte z.B. durch Spurveränderungen der fahrbaren Maschine aufnimmt. Diese Lösung ist insbesondere bei kleineren Querkräften geeignet, wobei der Auslegerarm ggf. allein durch die Reaktionskraft der Längsführung zur Kompensation ein- oder ausfahren kann.

Bei einem System mit Zustellsteuerung sieht eine einfache Ausführungsform der Detektoranordnung vor, dass diese zwei Näherungsschalter aufweist, welche jeweils seitlich am Mitnehmer, insbesondere an der schwimmenden Lagerung des Mitnehmers vorgesehen sind, um zu erkennen, ob der Mitnehmer bzw. der schwimmend gelagerte Teil des Mitnehmers, sich übermäßig an seitliche Anschläge annähert. Die Detektoranordnung kann vorzugsweise über einen Steckverbinder der Koppelvorrichtung mit der Zustellsteuerung verbunden werden. Hierzu kann insbesondere der vorhandene Steckverbinder genutzt, oder ein zusätzlicher Steckverbinder vorgesehen werden.

Um der fahrbaren Maschine, beispielsweise einem RTG, hinreichend Spielraum in Querrichtung zu bieten, ist es zweckmäßig, wenn die Reichweite des ausfahrbaren Auslegerarms mindestens das Dreifache, vorzugsweise mindestens das Zehnfache des Querspiels am Mitnehmer, insbesondere des Querspiels der schwimmenden Lagerung, beträgt. Dieses Querspiel selbst liegt vorzugsweise im Bereich von 25% bis 200% der Breite der Energieführungskette.

Neben der Verwendung von bewährten Energieführungsketten ermöglicht es das vorgeschlagene System ferner, dass Datenleitungen, insbesondere optische Datenleitungen und/oder Schlauchleitungen, zur Versorgung der Maschine mit flüssigen oder gasförmigen Betriebsmitteln automatisch angekoppelt werden können. Diese können auch ohne weiteres durch eine erfindungsgemäße Energieführungskette geführt werden.

In zweckmäßiger Ausführung ist die Zustellsteuerung zur Einhaltung des Querspiels am Mitnehmer, neben der für die eigentliche Zustellung erforderlichen Funktionalität, ausgeführt, um die o.g. Kompensationsfunktion zu realisieren, d.h. bei unzulässiger Abstandsüberschreitung in Querrichtung nachzustellen und/oder wenn der Auslegerarm bis zum Anschlag ein- oder ausgefahren ist, einen Nothalt der Maschine auslöst. Die Zustellsteuerung kann im regelungstechnischen Sinne als echte Steuerung, d.h. ohne Rückführung der Messgröße, oder als echte Regelung mit Rückführung der Messgröße ausgeführt sein.

Die vorgeschlagenen Systeme eignen sich insbesondere zur Elektrifizierung bzw. Stromversorgung einer fahrbaren Maschine, entweder ohne Spurtreue z.B. eines Container-Stapelkrans mit Gummibereifung (RTG), oder mit gewisser oder vollständiger Spurtreue, wie z.B. eines schienengebundenen Container-Stapelkrans.

Die Erfindung betrifft ferner eine Koppelvorrichtung gemäß Anspruch 11, d.h. speziell zum automatischen Abkoppeln einer fahrbaren Maschine, beispielsweise eines Container-Stapelkrans, an eine Fahrversorgung. Die Koppelvorrichtung ist getrennt von der Energieführungskette und stellt einen unabhängigen Aspekt dar, der für sich als schutzwürdig erachtetet wird. Sie wird unabhängig von der Fahrversorgung und vom System mit Fahrversorgung beansprucht.

Die gattungsgemäße Koppelvorrichtung nach dem Oberbegriff aus Anspruch 11 ist für die beiden vorgeschlagenen Systeme geeignet. Die Koppelvorrichtung zeichnet sich erfindungsgemäß dadurch aus, dass am Endbereich des ausfahrbaren Auslegerarms ein Kupplungsstück vorgesehen ist, welches mit dem zusammenwirkenden Kupplungsgegenstück am Mitnehmer verbindbar ist und mit diesem zur Lagefixierung zusammenwirkt. Ferner zeichnet sich die Koppelvorrichtung dadurch aus, dass am Endbereich ein Steckverbinder zur Versorgung der fahrbaren Maschine, insbesondere zur Energieversorgung, vorgesehen ist. Der Steckverbinder passt zu einer zusammenwirkenden Buchse am Mitnehmer der Energieführungskette, damit letztere leitungstechnisch an die fahrbare Maschine gekoppelt werden kann. Der Steckverbinder kann die fahrbare Maschine insbesondere elektrisch an die Fahrversorgung ankoppeln, aber auch informationstechnisch oder zur Betriebsmittelspeisung.

Dementsprechend erfolgt anhand der Kupplungsstücke die Festlegung der Relativlage, wodurch wiederum die Verwendung von Steckverbindern zur Energieversorgung der fahrbaren Maschine und gegebenenfalls zur Versorgung mit Daten oder Betriebsmitteln ermöglicht wird.

Vorzugsweise weist die Koppelvorrichtung, zusätzlich zur Quer- und zur Höhenzustelleinheit, eine Längszustelleinheit auf, mit welcher der Endbereich des Auslegerarms, gegebenenfalls mitsamt der Quer- und/oder Höhenzustelleinheit, in Längsrichtung bezüglich der Fahrversorgung, z.B. der Energieführungskette, zustellbar ist. Hierdurch wird vermieden, dass zur Ankopplung eine Bewegung der fahrbaren Maschine erfolgen müsste. Die zusätzliche Längszustelleinheit kann eine entsprechende Bewegung des Endbereichs des Auslegerarms in Fahrtrichtung bzw. in Längsrichtung der Fahrversorgung erzeugen, um das Kupplungsstück mit dem Gegenkupplungsstück zu verbinden. Quer- und Höhenzustelleinheit können zuvor genutzt werden, um den Endbereich des Auslegerarms in die Ausgangsposition für die Ankopplung zu bringen.

Eine vollständige Automatisierung wird erleichtert, wenn am Endbereich des Auslegerarms Positionsgeber vorgesehen sind, welche zur Bestimmung der Quer- und Höhenposition des Endbereichs, und ggf. dessen Längsposition bei zusätzlicher Längszustelleinheit, in Bezug auf die zu koppelnde Energieführungskette dienen. Entsprechende Positionsgeber wirken ggf. mit einer bzw. der Zustellsteuerung zusammen. So kann ein Antrieb der Querzustelleinheit und ein Antrieb der Höhenzustelleinheit zwecks automatischer Ankopplung gesteuert werden, um eine Ankoppelposition genau anzufahren.

Zweckmäßig, insbesondere bei vollautomatischer Ausführung, ist der Steckverbinder mit einem unabhängigen Antrieb wirkverbunden, insbesondere mit einem Antrieb zum Zustellen des Steckverbinders in Richtung parallel zur Querzustellrichtung. So kann die Steckverbindung unabhängig hergestellt werden, beispielsweise während der Endphase des Verbindens der mechanischen Kupplungsstücke oder aber im Anschluss an das Verbinden der Kupplungsstücke.

Vorzugsweise weist die am Mitnehmer vorgesehene Buchse für den Steckverbinder einen Witterungsschutz mit Schutzklappe auf, um die Steckverbindung vor Witterungseinflüssen zu bewahren. Die Schutzklappe kann ohne weiteres durch Bewegung des Steckverbinders geöffnet und wieder geschlossen werden.

Die vorgeschlagene Koppelvorrichtung eignet sich speziell zur Kopplung mit einer Energieführungskette.

Zusätzlich zum vorgeschlagenen System und der Koppelvorrichtung hierfür betrifft die Erfindung ferner eine mechanische Kupplung mit einem als Fangmaul ausgeführten Kupplungsstück und einem damit zusammenwirkenden Kupplungsgegenstück, das als Kupplungskopf ausgeführt ist. Die vorgeschlagene mechanische Kupplung eignet sich insbesondere, aber nicht ausschließlich, für eine Koppelvorrichtung bzw. ein System wie oben beschrieben. Sie stellt einen weiteren, unabhängigen Aspekt dar, der für sich genommen als schutzwürdig angesehenen wird.

Gemäß der Erfindung zeichnet sich die vorgeschlagene mechanische Kupplung dadurch aus, dass der Kupplungskopf mindestens einen Fortsatz aufweist, welcher zur Sicherung senkrecht zur Längsrichtung, entlang welcher der Kupplungskopf in das Fangmaul eingeführt wird, formschlüssig mit dem Fangmaul und/oder dem Riegel der Kupplung zusammenwirkt. Die Sicherung senkrecht zur Längsrichtung kann insbesondere bezüglich den beiden Hauptrichtungen bzw. Achsen eines Achsenkreuzes erfolgen, welche senkrecht zur Längsrichtung stehen. Ferner zeichnet sich die vorgeschlagene mechanische Kupplung dadurch aus, dass der Riegel wiederum formschlüssig mit dem mindestens einen Fortsatz zur Sicherung in der Längsrichtung zusammenwirkt. Ferner ist die Kupplung erfindungsgemäß so gestaltet, dass der Kupplungskopf nach Verriegelung in einer vorbestimmten, festgelegten Lage am Fangmaul befestigt ist.

Durch das Vorgeben einer festgelegten Relativlage zwischen Kupplungsstück und Kupplungsgegenstück, wird unter anderem erreicht, dass anschließend eine elektrische Kopplung mittels einer separaten Steckverbindung, beispielsweise zwischen dem Mitnehmer einer Energieführungskette und dem Endbereich eines Auslegerarms, hergestellt werden kann. Weiterhin wird durch die vorgeschlagene Gestaltung erreicht, dass eine starre Verbindung zwischen den Kupplungsstücken hergestellt wird und somit Kräfte in alle Richtungen übertragen werden. Auch dies ist insbesondere bei Verwendung zusammen mit einer Steckverbindung für Leitungen wünschenswert.

In einer alternativen oder ergänzenden Ausführungsform, kann die elektrische Kopplung auch unter Ausnutzung der Bauteile der mechanischen Kupplung realisiert werden, z.B. durch Kontakte am Riegel und am Fortsatz bzw. an den Fortsätzen.

Vorzugsweise ist die mechanische Kupplung so gestaltet, dass das Fangmaul einen Aufnahmebereich aufweist, welcher den mindestens einen Fortsatz gegen Verdrehen sichert, insbesondere bezüglich allen Achsen eines Achsenkreuzes. Mit einem entsprechend gestalteten Fangmaul kann z.B. der Mitnehmer einer Energieführungskette vollständig drehfest am zu koppelnden Maschinenteil befestigt werden.

In einer zweckmäßigen Ausführung sind am Kupplungskopf zwei pollerartige Fortsätze vorgesehen, welche am oberen Ende jeweils eine Verdickung aufweisen. Die Verdickung kann beispielsweise knauf-, kranz-, kronen-, kugelförmig oder ähnlich gestaltet sein. Beide Fortsätze sind für einen formschlüssigen Eingriff an die Aufnahme angepasst. Mit dieser Gestaltung lässt sich eine stabile, spielfreie und drehfeste Verbindung zwischen Fangmaul und Kupplungskopf realisieren. Sie erleichtert ggf. auch das Integrieren elektrischer Kontakte für eine Stromversorgung.

Auch andere Gestaltungen des Fortsatzes, beispielsweise ein T-förmiger Flansch mit einer Durchgangsöffnung zum Eingriff des Riegels, sind denkbar und liegen im Rahmen der Erfindung.

Vorteilhaft ist die mechanische Kupplung so gestaltet, dass der mindestens eine Fortsatz teilweise oder vollständig entlang einer Längsrichtung in das Fangmaul einführbar ist. Zweckmäßig sind hierbei am Fangmaul Zentrierschrägen zur Einführung des Fortsatzes vorgesehen.

Die vorstehend zur Kupplung bzw. Koppelvorrichtung genannten Merkmale sind auch auf das System anwendbar und umgekehrt, soweit sie zugehörige Bauteile betreffen. Die oben genannten, bevorzugten Ausführungsformen werden demnach auch für das System, die Koppelvorrichtung und ggf. die mechanische Kopplung als relevant beansprucht.

Weitere Einzelheiten, Vorteile und Merkmale der Erfindung lassen sich der nachfolgenden Beschreibung einer bevorzugten Ausführungsform mit nicht einschränkendem Beispielcharakter entnehmen. In den zu diesem Zweck beigefügten Zeichnungen zeigen:
- FIG.1A-1B:: ein Perspektivschema eines erfindungsgemäßen Systems zum vollautomatischen Ankoppeln eines Fahrzeugs, hier eines RTG, an eine Energieführungskette (FIG.1A) sowie in vergrößerter Ansicht eine Koppelvorrichtung hierfür (FIG.1B);
- FIG.2A-2D:: im Perspektivschema verschiedene Schritte des Ankoppelvorgangs an eine Energieführungskette mit einer Koppelvorrichtung gemäß FIG.1B;
- FIG.3:: eine vergrößerte Perspektivansicht eines Kupplungskopfes am Mitnehmer der Energieführungskette, welcher mit der Koppelvorrichtung nach FIG.1B zusammenwirkt;
- FIG.4A-4D:: Teilansichten einer mechanischen Kupplung, insbesondere für ein System nach FIG.1A-1B;
- FIG.5A-5C:: Teilansichten einer Steckverbindung für die elektrische Kopplung zwischen der Koppelvorrichtung und der Energieführungskette;
- FIG.6:: eine schematische Querschnittsansicht der Energieführungskette, wobei ein Mitnehmer ein Kupplungsgegenstück mit Querspiel schwimmend lagert, und die Koppelvorrichtung nur teilweise gezeigt ist.

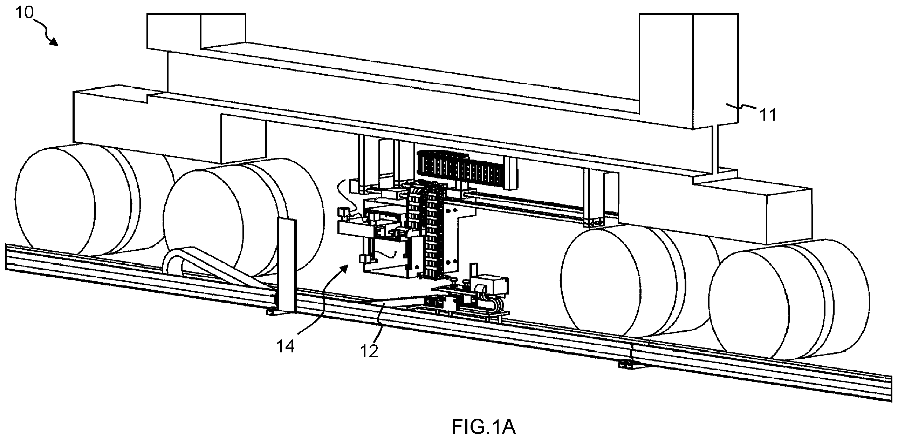

FIG.1A zeigt im Prinzipschema ein System 10 zum automatischen Ankoppeln eines RTG 11 an eine Fahrversorgung, welche erfindungsgemäß als Energieführungskette 12 ausgeführt ist. Vom RTG 11 ist nur ein Kranfuß mit Gummibereifung schematisch gezeigt. Der Aufbau der Energieführungskette 12 ist an sich bekannt, z.B. ein Aufbau aus verketteten und gegeneinander verschwenkbaren Gliedern, welche wiederum meist aus zwei oder vier Einzelteilen zusammengesetzt sind. Geeignet ist z.B. eine Energieführungskette 12 gemäß den Patenten DE3531066C2 oder EP0803032B1 oder gemäß EP1359343B1, auf deren Lehre betreffend Glieder und Gelenkverbindungen verwiesen wird.

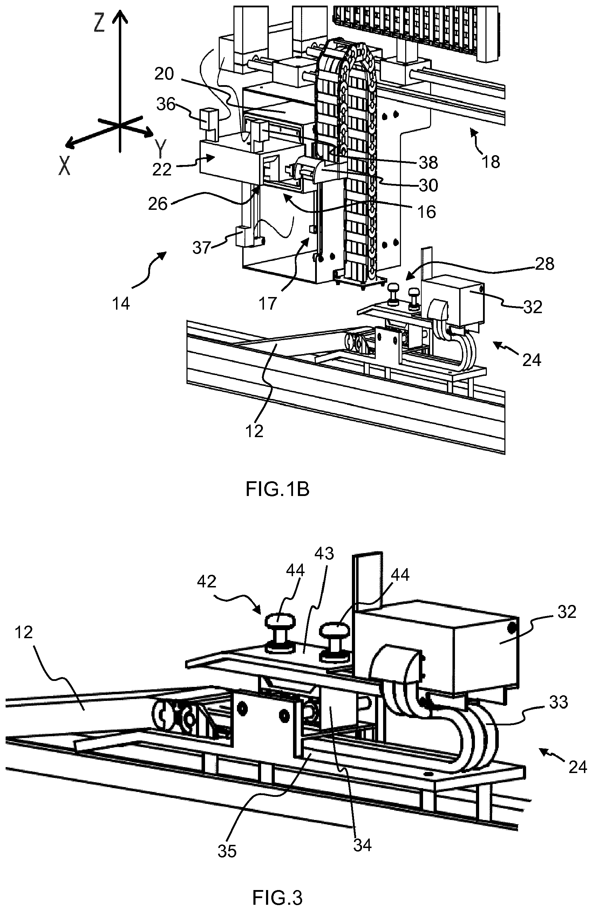

Das System 10 umfasst eine Koppelvorrichtung 14, welche in FIG.1B näher gezeigt ist. Die Koppelvorrichtung 14 umfasst eine Querzustelleinheit 16 zur Zustellung in Richtung quer zum Längsverlauf der Energieführungskette 12 (X-Achse im Achsenkreuz aus FIG.1B), d.h. etwa horizontal, eine Höhenzustelleinheit 17 zum Zustellen in etwa vertikaler Richtung (Z-Achse in FIG.1B) sowie eine weitere Längszustelleinheit 18, mittels welcher die Querzustelleinheit 16 und die Höhenzustelleinheit 17 im Wesentlichen in Fahrtrichtung des RTG 11 längsverschieblich zustellbar sind (Y-Achse in FIG.1B). Alle Zustelleinheiten 16, 17, 18 sind automatisch einstellbar mit entsprechenden Antrieben, wie beispielsweise elektromotorischen Linearachsen (nur zum Teil gezeigt), ausgestattet.

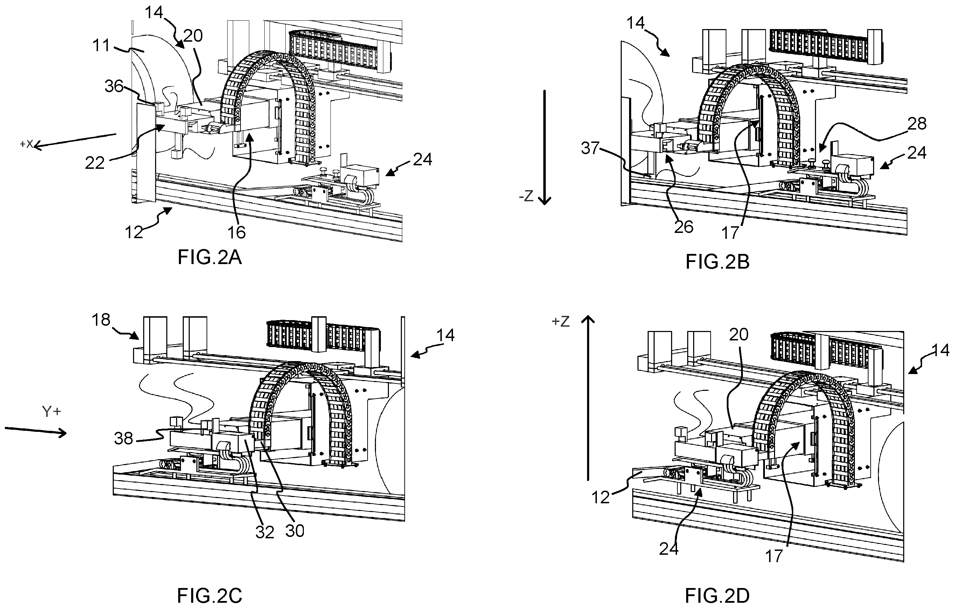

Wie ein Vergleich aus FIG.1B mit FIG.2A zeigt, umfasst die Querzustelleinheit 16 einen teleskopisch ein- und ausfahrbaren Auslegerarm 20, dessen Endbereich 22 quer zur Längsrichtung der Energieführungskette 12 zustellbar ist.

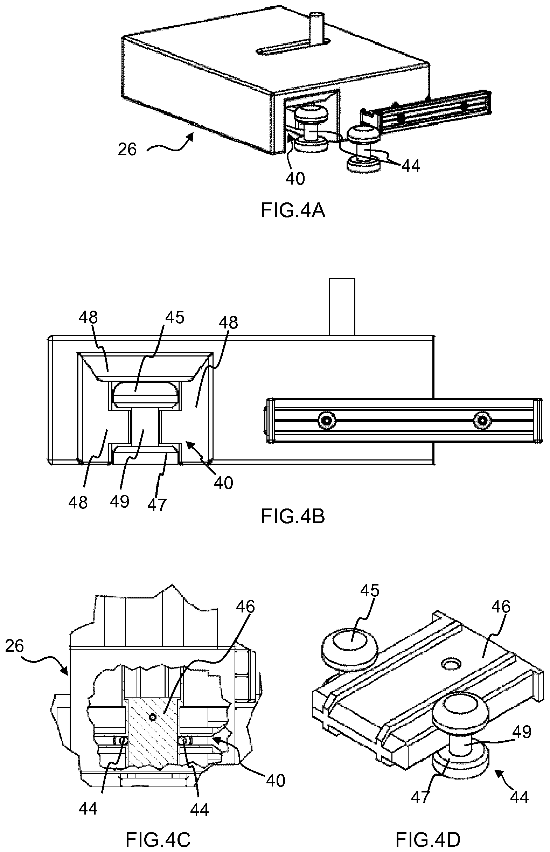

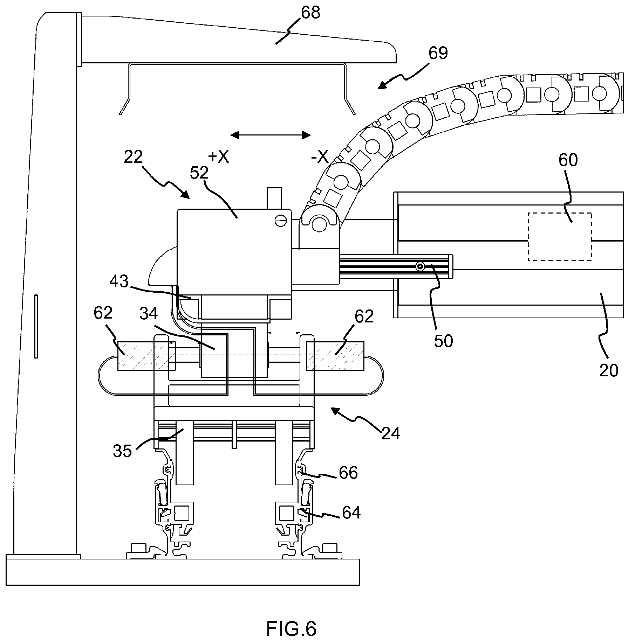

Die Energieführungskette 12 umfasst einen Mitnehmer 24, in FIG.3 und FIG.6 näher gezeigt, an welchem die Koppelvorrichtung 14 den Endbereich 22 vollautomatisch an- bzw. abkoppelt (s. FIG.2D). Zu diesem Zweck umfasst der Endbereich 22 des Auslegerarms 20 ein erstes Kupplungsstück 26, welches passend zu einem zusammenwirkend ausgeführten Kupplungsgegenstück 28 am Mitnehmer 24 ausgeführt ist. Kupplungsstück 26 und Kupplungsgegenstück 28 bilden eine mechanische Kupplung, welche die Lage des Kupplungsgegenstücks 28 am Mitnehmer 24 bezüglich des Kupplungsstücks 26 im verbundenen Zustand festlegt. Ein geeignetes Beispiel einer solchen Kupplung ist in FIG.4A-4D unten näher beschrieben.

Wie FIG.1B zeigt, ist am Endbereich 22 des Auslegerarms 20 zum automatischen An- bzw. Abkoppeln der für den RTG 11 erforderlichen Leitungen ein Steckverbinder 30 vorgesehen. Der Steckverbinder 30 wird mit einer entsprechenden Buchse 32 am Mitnehmer 24 der Energieführungskette 12 verbunden. Durch Steckverbindung kann der RTG 11 insbesondere mit elektrischem Strom versorgt werden.

Zunächst wird der Ablauf eines automatischen Ankoppelvorgangs ausgehend von FIG.1A anhand einer Abfolge von Momentaufnahmen in FIG.2A-2D näher erläutert:
i) In einer Startposition, wie in FIG.1A gezeigt, wird der RTG 11 mit seinem Kranfuß in geeignetem Abstand seitlich und parallel an die Energieführungskette 12 herangefahren. Hierbei kommt es, aufgrund der Koppelvorrichtung 14, auf die exakte Position des RTG 11 nicht an. Die Koppelvorrichtung 14 soll jedoch im Bereich der in FIG. 1A dargestellten Parkposition bzw. der Haltestelle des Mitnehmers 24 liegen.
ii) Gemäß FIG.2A-2B stellt zunächst die Querzustelleinheit 16 den Endbereich 22 in Richtung quer zur Energieführungskette 12 (X-Achse) in eine Sollposition zu. Am Endbereich 22 sind Positionsgeber 36, 37, 38 jeweils für die Sollposition in Quer-, Höhen- und Längsrichtung (X-, Z-, Y-Achsen in FIG.1B) vorgesehen. Der Positionsgeber 36 signalisiert die Sollposition in Querrichtung (X-Achse) anhand einer Referenzmarke an der Energieführungskette 12.
iii) FIG.2B veranschaulicht das Zustellen des Endbereichs 22 des Auslegerarms 20 in der Höhe mittels der Höhenzustelleinheit 17. Das Erreichen der Sollposition in Höhenrichtung (Z-Achse) wird mit dem Positionsgeber 37 und einer entsprechenden Referenzmarke an der Energieführungskette 12 erkannt.
iv) FIG.2C zeigt die Endposition für das Ankoppeln der Leitungen. Nachdem die Sollhöhe gemäß FIG.2B erreicht ist, stellt die Längszustelleinheit 18 den Endbereich 22 mitsamt dem ganzen Auslegerarm 20 der Querzustelleinheit 16 und der Höhenzustelleinheit 17 in Fahrtrichtung (Y-Achse) des RTG 11 zu. Die Fahrtrichtung entspricht nicht zwingend exakt aber im Wesentlichen der Längsrichtung der Energieführungskette 12. Die Längszustelleinheit 18 bewegt den Endbereich 22 in die Endposition nach FIG.2C, wo dieser mit dem Mitnehmer 24 im Eingriff steht. Der Positionsgeber 38 signalisiert die Sollposition in Längsrichtung (Y-Achse) durch eine entsprechende Referenzmarke am Mitnehmer 24.
v) Ist die Endposition nach FIG.2C erreicht, erfolgt anhand des Kupplungsstücks 26 und des Kupplungsgegenstücks 28 die mechanische Verriegelung bzw. Lagefixierung des Mitnehmers 24 am Endbereich 22 des Auslegerarms 20. Unmittelbar im Anschluss hieran erfolgt das Ankoppeln der zu verbindenden Leitungen mittels Steckverbinder 30 und Buchse 32. Die Querzustelleinheit 16 und die Längszustelleinheit 18 weisen, wie aus FIG.2A-2D ersichtlich, zusätzliche Energieführungsketten zur beweglichen Leitungsführung vom RTG 11 hin zum Steckverbinder 30 auf.
vi) In einem abschließenden Schritt nach FIG.2D erfolgt ein leichtes Anheben des Mitnehmers 24 in Höhenrichtung (Z-Achse) anhand der Höhenzustelleinheit 17, um ausreichend Toleranz zu bieten in der Vertikalen, z.B. für die Aufnahme einer schwereren Ladung am RTG 11.

Das Abkoppeln des Mitnehmers 24 vom Endbereich 22 erfolgt in umgekehrter Abfolge (FIG.2D->FIG.2A). Hierbei wird der Mitnehmer 24 an einer vorgegebenen Parkposition in Längsrichtung der Energieführungskette 12 (s. FIG.1B) abgelegt.

FIG. 3 zeigt in vergrößerter Perspektive den Aufbau des Mitnehmers 24. Der Mitnehmer 24 umfasst an seinem oberen Endbereich das Kupplungsgegenstück 28 (nachfolgend kurz: Gegenstück 28), seitlich und von oben für das Kupplungsstück 26 am Auslegerarm 20 zugänglich angeordnet. Das Gegenstück 28 ist zur Seite des Endglieds der Energieführungskette 12 (schematisch gezeigt) angeordnet. Auf der in Längsrichtung (Y-Achse) abgewandten Seite des Mitnehmers 24 befindet sich die Buchse 32 für den Steckverbinder 30, über welche Leitungen 33 für Energie, Daten und/oder Medien gekoppelt werden. Gegenstück 28 und Buchse 32 sind anhand eines Schwimmers 34 in Querrichtung (X-Achse) gegenüber einem Führungsschlitten 35 des Mitnehmers 24 beweglich bzw. schwimmend gelagert. Der Führungsschlitten 35 bildet die bewegliche Anschlussstelle für ein Endglied der Energieführungskette 12.

FIG. 4A-4D veranschaulichen einen beispielhaften Aufbau einer mechanischen Kupplung, welche als praktische Umsetzung des Kupplungsstücks 26 und des Kupplungsgegenstücks 28 (Gegenstück 28) besonders geeignet ist. Das Kupplungsstück 26 in FIG. 4A-4D umfasst ein Fangmaul 40 (auch als Kupplungsmaul bezeichnet). Das Gegenstück 28 in FIG. 4A-4D ist entsprechend als Kupplungskopf 42 passend zum Fangmaul 40 ausgeführt. Der Kupplungskopf 42 besteht im Wesentlichen aus zwei Fortsätzen 44 und einer Grundplatte 43 (s. FIG.3), von welcher die Fortsätze 44 senkrecht nach oben vorstehen. Das Fangmaul 40 bildet eine in Längsrichtung (Y-Achse) erstreckte Aufnahme, welche formschlüssig mit dem etwa I-förmigen oder T-förmigen Querschnitt (in der X-Z Ebene) der Fortsätze 44 zusammenwirkt, so dass im gefangenen Zustand der Kupplungskopf 42 und somit auch das Gegenstück 28 senkrecht zur Längsrichtung (Y-Achse), hier entlang beider Achsen (X-Achse, Z-Achse) des Achsenkreuzes gesichert ist.

Weiterhin umfasst das Kupplungsstück 26 einen in Querrichtung (X-Achse) einstellbar gelagerten Riegel 46. Der Riegel 46 wirkt formschlüssig mit beiden Fortsätzen 44 zusammen, um den Kupplungskopf 42 zumindest in Längsrichtung (Y-Achse), vorzugsweise zusätzlich in Höhenrichtung (Z-Achse), im Fangmaul 40, d.h. am Kupplungsstück 26 zu sichern. Durch den beschriebenen Formschluss, siehe FIG. 4B-4D, wird erreicht, dass der Kupplungskopf 42 nach der Verriegelung mit dem Riegel 46 in fest vorgegebener Position im Fangmaul 40 gehalten ist. Das Gegenstück 28 ist damit in festgelegter Lage am Kupplungsstück 26 befestigt.

FIG.4A zeigt Zentrierschrägen 48, welche zum Auffangen von kleineren Toleranzen bzw. des Querspiels des Schwimmers 34 vorgesehen sind. Die Zentrierschrägen 48 an der Öffnung des Fangmauls 40 dienen bei der Positionierung des Endbereichs 22, jeweils als seitlich und nach oben öffnende Schrägflächen, der Zentrierung der Fortsätze 44. So wird der Kupplungskopf 42 vorpositioniert, um das Gegenstück 28 in das Fangmaul 40 entlang der Längsrichtung (Y-Achse) für die Verriegelung einzuführen.

Wie am besten in FIG.4B und FIG.4D zu sehen, sind die Fortsätze 44 pollerartig mit einer Verdickung 45 am oberen Ende einer Achse 49, hier ähnlich wie ein Knauf, ausgeführt. Die Achsen 49 dienen hierbei dem Riegel 46 als Anschlag in Längsrichtung (Y-Achse) zu jeder Seite des Riegels 46. Die Verdickung 45, zusammen mit einer weiteren Verdickung 47 jeweils am Fuß des Fortsatzes 44 (Z-Achse), dienen als zusätzliche, flanschartige Arretierung in Höhenrichtung (X-Achse). FIG.4C-4D zeigen den verriegelten Zustand, bei welchen der Riegel 46 formschlüssig in die Fortsätze 44 eingreift.

Der Riegel 46 ist, wie FIG.4C zeigt, mittels einer Linearführung parallel zur Zustellrichtung (X-Achse) des Auslegerarms 20 verschiebbar gelagert. Der Riegel 46 kann manuell betätigt werden, wird aber vorzugsweise über einen gesonderten Antrieb als Bestandteil des Kupplungsstücks 26 automatisiert ein- und ausgeschoben, z.B. mit einer elektrischen Linearachse (nicht näher gezeigt). Gegebenenfalls kann die Betätigung des Steckverbinders 30 über ein Verzögerungsgetriebe mit diesem Antrieb des Riegels 46 erfolgen.

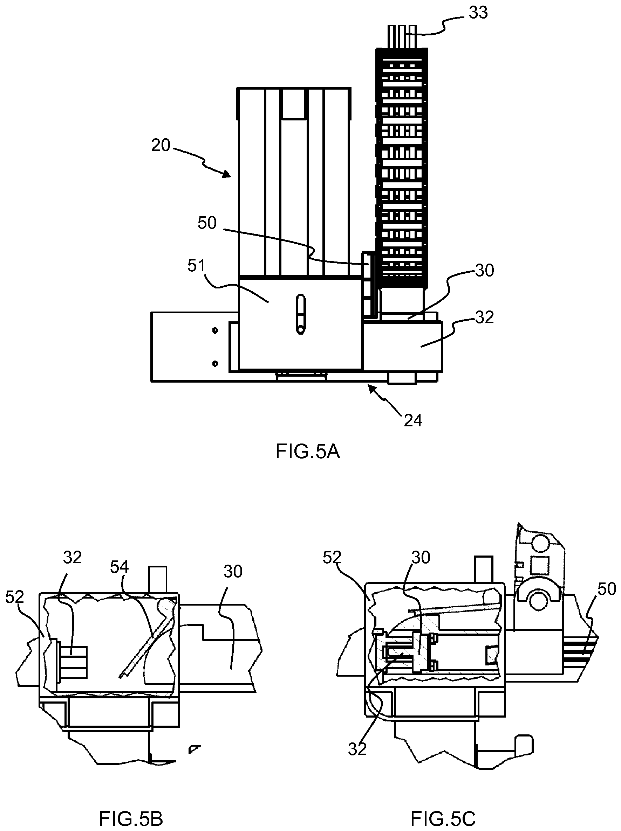

FIG.5A-5C veranschaulichen die automatische Kopplung der Leitungen 33 zwischen Mitnehmer 24 und dem Auslegerarm 20. Hierzu ist der Steckverbinder 30 durch eine Linearachse 50 geführt und parallel zur Zustellrichtung (X-Achse) des Auslegerarms 20 zustellbar. Die Linearachse 50 ist z.B. seitlich am Schutzgehäuse 51 des Kupplungsstücks 26 befestigt. Die Buchse 32 für den Steckverbinder 30 umfasst ebenfalls ein Schutzgehäuse 52 am Mitnehmer 24. Zum weiteren Schutz gegen Witterungseinflüsse ist am Schutzgehäuse 52 eine federbelastete Schwenkklappe 54 vorgesehen, welche beim Ein- und Ausfahren des Steckverbinders 30 mit öffnet bzw. schließt (FIG.5B). Als eigentlicher Stecker bzw. Dose für Steckverbinder 30 bzw. Buchse 32 können mit dem Aufbau in FIG.5A-5C handelsübliche, bewährte Bauteile eingesetzt werden.

FIG.6 zeigt das System 10 im Querschnitt mit u.a. einer Führungsrinne 64 für die Energieführungskette 12, welche eine linear verlaufende Trasse definiert, senkrecht zur Figurenebene. Die Führungsrinne 64 bildet zugleich eine mechanische Längsführung durch Gleitleisten 66 für Kufen unten am Schlitten 35 des Mitnehmers 24. Die Längsführung durch die Gleitleisten 66 hilft, Querkräfte am Endglied der Energieführungskette 12 zu vermeiden, d.h. Querbelastungen in den Gelenkverbindungen der Energieführungskette 12 zu vermeiden. Der insbesondere zu diesem Zweck vorgesehene Schwimmer 34 ist auch in FIG.6 näher gezeigt. Der Schwimmer 34 umfasst zwei am Schlitten 35 befestigte horizontale Achsen, auf welchen Gleit- oder Wälzlager, die an der Grundplatte 43 befestigt sind, den oberen Teil des Mitnehmers 24, mit Querspiel parallel zur Zustellrichtung (X-Achse) lagern. So werden Querkräfte am Kupplungsgegenstück 28 im Normalbetrieb nicht auf die eigentliche Energieführungskette 12 übertragen.

FIG.6 zeigt zugleich als Prinzipschema eine Zustellsteuerung 60, welche die Querposition entlang der X-Achse bei Bedarf neu einstellt, um den begrenzten Toleranzbereich des Mitnehmers 24 deutlich zu erweitern. Die Zustellsteuerung 60 nutzt zwei als Messglied dienende Näherungsschalter 62. Die Näherungsschalter 62 sind beidseitig am Mitnehmer 24 vorgesehen, um die Position der Grundplatte 43 bzw. des Kopplungsgegenstücks 28 zu erfassen und sind über den Steckverbinder 30 an die Zustellsteuerung angeschlossen. Bevor das Querspiel des Schwimmers 34 aufgebraucht ist, signalisiert dies der entsprechende Näherungsschalter 62 an die Zustellsteuerung 60.

Die Zustellsteuerung 60 nutzt die Querzustelleinheit 16 der Koppelvorrichtung 14 als Stellglied. Je nach Spurabweichung des RTG 11, die über den entsprechenden Näherungsschalter 62 erkannt wird, stellt die Zustellsteuerung 60 die Querposition des Auslegerarms 20 jeweils im Fahrbetrieb neu ein. Hierzu betätigt die Zustellsteuerung 60 den Antrieb der Querzustelleinheit 16 zum Ausfahren (+X in FIG.6) oder Einfahren (-X in FIG.6) des Endbereichs 22. So wird sichergestellt, dass das verfügbare, kleinere Querspiel des Schwimmers 34 am Mitnehmer 24 nicht überschritten wird. Sollte der Auslegerarm 20 selbst in Anschlag geraten können, kann ein Nothalt oder eine Notabkopplung erfolgen. So können größere Spurabweichungen eines nicht spurtreuen Verbrauchers, z.B. eines RTG 11 zugelassen werden, ohne dass die Energieführungskette 12 bzw. die Führungsrinne 64 beschädigt wird.

Die Zustellsteuerung 60 ist vorzugsweise zugleich die Steuerung der Koppelvorrichtung 14, d.h. für die einzelnen Zustelleinheiten 16, 17, 18.

Alternativ zur gezeigten Ausführung ist es bei geringen Spurabweichungen möglich, auf die Detektoranordnung mit Näherungsschaltern 62 und das entsprechende Nachjustieren des Auslegerarms 20 zu verzichten. In diesem Fall dient die Zustellsteuerung 60 lediglich zur Automatisierung der Koppelvorrichtung 14. Der Schwimmer 34 mit entsprechend gewähltem Querspiel kann in dieser Variante bereits die Energieführungskette 12 gegen Querkräfte schützen. Eine solche Ausführung ist z.B. für ein schienengebundenes Fahrzeug geeignet. Bei größeren Querkräften, z.B. einem Auslegerarm 20 ohne Freilauf in Querrichtung, ist es hierbei zweckmäßig, zusammen mit dem Schwimmer 34 eine Längsführung, z.B. durch die Gleitleisten 66 vorzusehen.

FIG.6 zeigt schließlich einen Witterungsschutz 68 in der Art eines Überdachs, welcher die Führungsrinne 64 weitestgehend umgibt. Es ist jedoch entlang der gesamten Länge der Führungsrinne 64 (senkrecht zur Ebene in FIG.6) ein seitlicher Längsspalt 69 mit ausreichender Höhe für das Durchgreifen und die Höheneinstellung (Z-Achse) der Koppelvorrichtung 14 vorgesehen. Die Führungsrinne 64 kann in bekannter Weise, z.B. gemäß WO96/ 31710 A1 WO 97/ 40289 A1 ausgeführt sein.

### Bezugzeichenliste

FIG.1-6:
10 System zum automatischen Ankoppeln
11 RTG
12 Energieführungskette
14 Koppelvorrichtung
16 Querzustelleinheit
17 Höhenzustelleinheit
18 Längszustelleinheit
20 Auslegerarm
22 Endbereich
24 Mitnehmer
26 Kupplungsstück
28 Kupplungsgegenstück
30 Steckverbinder
32 Buchse
33 Leitung
34 Schwimmer
35 Führungsschlitten
36, 37, 38 Positionsgeber
40 Fangmaul
42 Kupplungskopf
43 Grundplatte
44 Fortsatz
45 Verdickung
46 Riegel
47 Verdickung
48 Zentrierschräge
49 Achse
50 Linearachse
51, 52 Schutzgehäuse
54 Schwenkklappe
60 Zustellsteuerung (schematisch)
62 Näherungsschalter
64 Führungsrinne
66 Gleitleisten
68 Witterungsschutz
69 Längsspalt

## Patentansprüche

1. System (10) zum automatischen Ankoppeln einer fahrbaren Maschine, insbesondere eines Container-Stapelkrans (11), an eine Fahrversorgung, umfassend:
eine Koppelvorrichtung (14) mit einer Querzustelleinheit (16) und einem ausfahrbaren Auslegerarm (20), wobei ein Endbereich (22) des Auslegerarms quer zur Fahrversorgung zustellbar ist und der Endbereich (22) zum Verbinden mit der Fahrversorgung ausgeführt oder ausgestattet ist;
**gekennzeichnet durch**
eine als Fahrversorgung dienende Energieführungskette (12) mit einem Mitnehmer (24);
eine mechanische Kupplung mit einem Kupplungsstück (26) am Endbereich (22) des Auslegerarms und einem Kupplungsgegenstück (28) am Mitnehmer (24) der Energieführungskette, welche zur Lagefixierung zusammenwirken; sowie durch
einen Steckverbinder (30) am Endbereich (22) und eine zusammenwirkende Buchse (32) am Mitnehmer (24), welche zur Versorgung, insbesondere Energieversorgung, der Maschine koppelbar sind.

2. System nach Anspruch 1, **gekennzeichnet durch** eine Führungsrinne (64) für die Energieführungskette (12), in welcher die Energieführungskette (12) ablegbar ist und eine Trasse, insbesondere eine weitestgehend linear verlaufende Trasse, definiert.

3. System nach Anspruch 2, **dadurch gekennzeichnet, dass** die Führungsrinne (64) der Energieführungskette (12) eine mechanische Längsführung (66) für den Mitnehmer (24) bildet und Querkräfte aufnimmt.

4. System nach Anspruch 2 oder 3, **dadurch gekennzeichnet, dass** die Führungsrinne einen Witterungsschutz (68) aufweist und einen seitlichen Längsspalt (69) für die Koppelvorrichtung (14) aufweist.

5. System (10) zum automatischen Ankoppeln einer fahrbaren Maschine, insbesondere eines Container-Stapelkrans (11), an eine Fahrversorgung, umfassend:
eine Koppelvorrichtung (14) mit einer Querzustelleinheit (16) und einem ausfahrbaren Auslegerarm (20), wobei ein Endbereich (22) des Auslegerarms quer zur Fahrversorgung zustellbar ist und der Endbereich (22) zum Verbinden mit der Fahrversorgung ausgeführt oder ausgestattet ist;
**dadurch gekennzeichnet, dass**
als Fahrversorgung eine Energieführungskette (12) mit einem Mitnehmer (24) vorgesehen ist;
dass ein Kupplungsstück (26) am Endbereich (22) des Auslegerarms und ein zusammenwirkendes Kupplungsgegenstück (28) am Mitnehmer (24) der Energieführungskette (12) vorgesehen sind, welche eine mechanische Kupplung bilden;
dass der Mitnehmer (24) das Kupplungsgegenstück (28) mit Querspiel quer zur Energieführungskette (12) schwimmend lagert (34).

6. System nach Anspruch 1 oder 5, **dadurch gekennzeichnet, dass** eine Zustellsteuerung (60) vorgesehen ist, welche mit einer Detektoranordnung (62) am Mitnehmer (24) und mit der Querzustelleinheit (16) zusammenwirkt, um im Betrieb die Querposition des Endbereichs (22) des Auslegerarms einzustellen, wobei die Zustellsteuerung insbesondere als Steuerung ohne Rückführung oder als Regelung ausgeführt ist, und vorzugsweise ausgeführt ist, um einen Nothalt oder ein automatisches Abkoppeln des Mitnehmers (24) auszulösen, bevor der Auslegerarm im Anschlag ein- oder ausgefahren ist.

7. System nach Anspruch 6, **dadurch gekennzeichnet, dass** die Detektoranordnung beidseitig am Mitnehmer (24) vorgesehene Näherungsschalter (62) umfasst, welche mit einer bzw. der Zustellsteuerung (60) verbindbar sind, vorzugsweise über einen Steckverbinder (30) der Koppelvorrichtung.

8. System nach einem der Ansprüche 1 bis 7, **dadurch gekennzeichnet, dass** die Reichweite des ausfahrbaren Auslegerarms (20) mindestens das dreifache, vorzugsweise mindestens das zehnfache des Querspiels am Mitnehmer (24) beträgt, wobei das Querspiel betragsmäßig vorzugsweise 25% bis 200% der Breite der Energieführungskette beträgt.

9. System nach einem der Ansprüche 1 bis 8, **dadurch gekennzeichnet, dass** die Energieführungskette eine oder mehrere Leitungen (33), insbesondere Stromversorgungsleitungen, optische Datenleitungen, und/oder eine oder mehrere Schlauchleitungen zur Medienversorgung, insbesondere mit flüssigem oder gasförmigem Betriebsmittel führt, welche durch die Koppelvorrichtung automatisch angekoppelt werden können.

10. Verwendung eines Systems nach einem der Ansprüche 1 bis 9 zur Stromversorgung eines Fahrzeugs, insbesondere eines Container-Stapelkrans (11) mit Gummibereifung (RTG: Rubber-Tyre-Gantry-Crane).

11. Koppelvorrichtung (14) zum automatischen Ankoppeln einer fahrbaren Maschine, insbesondere eines Container-Stapelkrans, an eine Fahrversorgung, umfassend:
eine Querzustelleinheit (16) mit ausfahrbarem Auslegerarm (20), mit welcher ein Endbereich (22) des Auslegerarms quer zur Fahrversorgung zustellbar ist; und eine Höhenzustelleinheit (17), mit welcher der Endbereich in der Höhe zustellbar ist; **dadurch gekennzeichnet, dass** am Endbereich (22) des Auslegerarms ein Kupplungsstück (26) vorgesehen ist, welches mit einem
Kupplungsgegenstück (28) am Mitnehmer (24) einer Energieführungskette (12) verbindbar ist, wobei das Kupplungsstück (26) derart ausgeführt ist, dass es zur Lagefixierung mit dem Kupplungsgegenstück (28) zusammenwirkt; und
am Endbereich (22) des Auslegerarms ein Steckverbinder (30) zur Versorgung der Maschine, insbesondere zur Energieversorgung, vorgesehen ist, für eine zusammenwirkende Buchse (32) am Mitnehmer (24).

12. Koppelvorrichtung nach Anspruch 11, **dadurch gekennzeichnet, dass** diese eine Längszustelleinheit (18) umfasst, mit welcher der Endbereich (22), gegebenenfalls zusammen mit der Quer- und/oder Höhenzustelleinheit, in Längsrichtung zustellbar ist.

13. Koppelvorrichtung nach Anspruch 11 oder 12, **dadurch gekennzeichnet, dass** am Endbereich Positionsgeber (36, 37, 38) vorgesehen sind zur Bestimmung der Quer- und Höhenposition, welche insbesondere mit einer Zustellsteuerung zusammenwirken.

14. Koppelvorrichtung nach Anspruch 11, 12 oder 13, **dadurch gekennzeichnet, dass** der Steckverbinder (30) mit einem unabhängigen Antrieb wirkverbunden ist, insbesondere zum Zustellen parallel zur Querzustellrichtung, so, dass die Steckverbindung unabhängig, insbesondere während dem oder nach dem Verbinden der Kupplungsstücke (26, 28), hergestellt werden kann.

## Claims

1. System (10) for automatically docking a mobile machine, in particular a container stacker crane (11), to a movable supply, the system comprising:
a docking device (14) with a transverse advancer unit (16) and an extendable extension arm (20), wherein an end portion (22) of the extension arm can be advanced transversely to the movable supply and the end portion (22) is designed or equipped for connecting to the movable supply;
**characterized by**
an energy guiding chain (12) serving as a movable supply and including an entrainment member (24);
a mechanical coupling including a coupling piece (26) on the end portion (22) of the extension arm and a coupling counterpart (28) on the entrainment member (24) of the energy guiding chain (12) cooperating for position fixing;
and by a plug connector (30) on said end portion (22) and a cooperating socket (32) on the entrainment member (24) which can be coupled for supplying said machine, in particular with energy.

2. System according to claim 1, **characterized by** a guide channel (64) for the energy guiding chain (12) in which the energy guiding chain (12) can be deposited and which defines a route, in particular a route running linearly as far as possible.

3. System according to claim 2, **characterized in that** said guide channel (64) of the energy guiding chain (12) forms a mechanical longitudinal guide (66) for the entrainment member (24) and receives lateral forces.

4. System according to claim 2 or 3, **characterized in that** the guide channel includes a weather protection and a lateral longitudinal gap (69) for the docking device (14).

5. System (10) for automatically docking a mobile machine, in particular a container stacker crane (11), to a movable supply, the system comprising:
a docking device (14) with a transverse advancer unit (16) and an extendable extension arm (20), wherein an end portion (22) of the extension arm can be advanced transversely to the movable supply and the end portion (22) is designed or equipped for connecting to the movable supply;
**characterized in that**
an energy guiding chain (12) with an entrainment member (24) is provided as a movable supply;
that a coupling piece (26) is provided on the end portion (22) of the extension arm and a cooperating coupling counterpart (28) is provided on the entrainment member (24), the coupling piece and the coupling counterpart forming a mechanical coupling; and
that the entrainment member (24) floatingly supports (34) the coupling counterpart (28) with lateral play transversely to the energy guiding chain (12).

6. System according to claim 1 or 5, **characterized in that** an advancing control (60) is provided which cooperates with a detector arrangement (62) on the entrainment member (24) and with the transverse advancer unit (16), for adjusting the horizontal position of the end portion (22) during operation, wherein said advancing control is in particular designed as an open-loop control or as closed-loop control and is preferably designed for triggering an emergency stop or automatic undocking of the entrainment member (24) before the extension arm is retracted or extended up to the limit stop.

7. System according to claim 6, **characterized in that** the detector arrangement comprises proximity switches (62) provided on both sides of the entrainment member (24), which proximity switches can be connected to an advancing control or to the advancing control (60), preferably through a plug connector (30) on the docking device.

8. System according to one of the claims 1 to 7, **characterized in that** the range of the extendable extension arm (20) is at least three times, preferably at least ten times the horizontal play on the entrainment member (24), the horizontal play preferably amounting to 25% to 100% of the width of the energy guiding chain.

9. System according to one of the claims 1 to 8, **characterized in that** the energy guiding chain carries one or more supply lines (33), in particular electric current supply lines, optical data transmission lines and/or one more hose pipes for media supply, in particular for supplying liquid or gaseous operating media, which supply lines can be automatically docked by said docking device.

10. Use of a system according to one of the claims 1 to 9, for the power supply of a vehicle, in particular of a container stacker crane (11) having rubber tires (RTG: rubber-tire gantry crane).

11. Docking device (14) for automatically docking a mobile machine, in particular a container stacker crane, to a movable supply, the docking device comprising:
a transverse advancer unit (16) with an extendable extension arm (20) by which an end portion (22) of the extension arm can be advanced transversely to the movable supply; and a vertical advancer unit (17) by which the end portion can be vertically advanced; **characterized in that** on the end portion (22) of the extension arm a coupling piece (26) is provided that can be connected to a coupling counterpart (28) on the entrainment member (24) of an energy guiding chain (12), the coupling piece (26) being configured in a manner so as to cooperate with the coupling counterpart (28) for position fixing; and that
on the end portion (22) of the extension arm a plug connector (30) for supplying the machine, in particular with energy, is provided for a cooperating socket (32) on the entrainment member (24).

12. Docking device according to claim 11, **characterized in that** the same comprises a longitudinal advancer unit (18) with which the end portion (22), if necessary together with the horizontal and/or vertical advancer units, can be advanced in the longitudinal direction.

13. Docking device according to claim 11 or 12, **characterized in that** position transmitters (36, 37, 38) are provided on the end portion, for determining the horizontal and vertical positions, the position transmitters in particular cooperating with an advancing control.

14. Docking device according to claim 11, 12 or 13, **characterized in that** the plug connector (30) is operatively connected to an independent drive, in particular for advancing parallel to the horizontal advancing direction so that the plug connection can be produced independently, in particular during or after the connection of the coupling pieces (26, 28).

## Revendications

1. Système (10) pour l'accouplement automatique d'une machine mobile, en particulier d'une grue d'empilage pour conteneurs (11), à une alimentation électrique mobile, comprenant:
un dispositif d'accouplement (14) ayant une unité d'amenée transversale (16) et un bras en porte à faux extensible (20), dans lequel une région d'extrémité (22) du bras en porte à faux peut être avancée transversalement par rapport à l'alimentation électrique mobile et la région d'extrémité (22) est conçue pour ou équipée pour le raccordement à l'alimentation électrique mobile; **caractérisé par** une chaîne de guidage d'énergie (12) servant d'alimentation électrique mobile ayant un élément d'entraînement (24);
un accouplement mécanique avec une partie d'accouplement (26) sur la région d'extrémité (22) du bras en porte à faux et une contrepartie d'accouplement (28) sur l'élément d'entraînement (24) de la chaîne de guidage d'énergie, qui coopèrent pour fixer en position; ainsi que par un connecteur enfichable (30) dans la région d'extrémité (22) et une prise coopérante (32) sur l'élément d'entraînement (24), le connecteur enfichable et la prise pouvant être accouplés à des fins d'alimentation, en particulier d'alimentation de la machine.

2. Système selon la revendication 1, **caractérisé par** une goulotte de guidage (64) pour la chaîne de guidage d'énergie (12) dans laquelle la chaîne de guidage d'énergie (12) peut être posée, et qui définit un tracé, en particulier un tracé en grande partie linéaire.

3. Système selon la revendication 2, **caractérisé en ce que** la goulotte de guidage (64) de la chaîne de guidage d'énergie (12) forme un guidage longitudinal mécanique (66) pour l'élément d'entraînement (24) et absorbe les forces latérales.

4. Système selon la revendication 2 ou 3, **caractérisé en ce que** la goulotte de guidage présente une protection contre les intempéries (68) et une fente longitudinale latérale (69) pour le dispositif d'accouplement (14).

5. Système (10) pour l'accouplement automatique d'une machine mobile, en particulier d'une grue d'empilage pour conteneurs (11), à une alimentation électrique mobile, comprenant:
un dispositif d'accouplement (14) ayant une unité d'amenée transversale (16) et un bras en porte à faux extensible (20), dans lequel une région d'extrémité (22) du bras en porte à faux peut être avancée transversalement par rapport à l'alimentation électrique mobile et la région d'extrémité (22) est conçue pour ou équipée pour le raccordement à l'alimentation électrique mobile;
**caractérisé en ce**
**qu'**il est prévu comme alimentation électrique mobile une chaîne de guidage d'énergie (12) ayant un élément d'entraînement (24);
**qu'**il est prévu une partie d'accouplement (26) sur la région d'extrémité (22) du bras en porte à faux et une contrepartie d'accouplement coopérant (28) sur l'élément d'entraînement (24) de la chaîne de guidage d'énergie (12), qui forment un accouplement mécanique;
**que** l'élément d'entraînement (24) supporte (34) la contrepartie d'accouplement (28) de façon flottante de sorte à permettre un jeu transversal transversalement à la chaîne de guidage d'énergie (12).

6. Système selon la revendication 1 ou 5, **caractérisé en ce qu'**une commande d'amenée (60) est prévue, qui coopère avec un agencement de détecteurs (62) sur l'élément d'entraînement (24) et avec l'unité d'amenée transversale (16) afin d'ajuster, durant le fonctionnement, la position transversale de la région d'extrémité (22) du bras en porte à faux, la commande d'amenée (60) étant en particulier conçu comme une commande en boucle ouverte ou en tant qu'asservissement à boucle fermée, et est de préférence conçue des sorte à déclencher un arrêt d'urgence ou un désaccouplement automatique de l'élément d'entraînement (24) avant que le bras en porte à faux vienne en butée d'extension ou de rentrée.

7. Système selon la revendication 6, **caractérisé en ce que** l'agencement de détecteurs comprend des détecteurs de proximité (62) prévus des deux côtés sur l'élément d'entraînement (24), qui peuvent être reliés avec une resp. la commande d'amenée (60), de préférence par l'intermédiaire d'un connecteur enfichable (30) du dispositif d'accouplement.

8. Système selon l'une quelconque des revendications 1 à 7, **caractérisé en ce que** la portée du bras en porte à faux extensible (20) est d'au moins trois fois, de préférence au moins dix fois le jeu latéral de l'élément d'entraînement (24), le jeu transversale correspondent en quantité de préférence à une valeur entre 25% à 200% de la largeur de la chaîne de guidage d'énergie.

9. Système selon l'une quelconque des revendications 1 à 8, **caractérisé en ce que** la chaîne de guidage d'énergie guide une ou plusieurs lignes (33), en particulier des lignes d'alimentation de courant, des lignes optiques de données, et/ou un ou plusieurs tuyaux pour approvisionner en médias, en particulier avec des médias liquides ou gazeux, qui peuvent être accouplés automatiquement, par le dispositif d'accouplement.

10. Utilisation d'un système selon l'une quelconque des revendications 1 à 9 pour l'alimentation électrique d'un véhicule, en particulier d'une grue d'empilage pour conteneurs (11) avec des pneus en caoutchouc (RTG: rubber-tyre-gantry crane).

11. Dispositif d'accouplement (14) pour l'accouplement automatique d'une machine mobile, en particulier d'une grue d'empilage pour conteneurs (11), à une alimentation électrique mobile, comprenant:
une unité d'amenée transversale (16) avec un bras en porte à faux (20) extensible moyennant lequel une région d'extrémité (22) du bras en porte à faux peut être positionnée transversalement à l'alimentation électrique mobile d'entraînement; et une unité d'amenée en hauteur (17) avec laquelle la région d'extrémité peut être positionnée en hauteur; **caractérisé en ce que**
une partie d'accouplement (26) est prévu sur la région d'extrémité (22) du bras en porte à faux, qui peut être reliée avec une contrepartie de couplage (28) sur l'élément d'entraînement (24) d'une chaîne de guidage d'énergie (12), la partie d'accouplement (26) étant conçue de telle sorte qu'elle coopère avec la contrepartie de couplage (28) pour fixer en position; et
qu'il est prévu sur la région d'extrémité (22) du bras en porte à faux, un connecteur enfichable (30) pour alimenter la machine, notamment pour l'alimentation en énergie, pour coopérer avec une prise (32) sur l'élément d'entraînement (24) .

12. Dispositif d'accouplement selon la revendication 11, **caractérisé en ce qu'**il comprend une unité d'amenée en longueur (18) avec laquelle la région d'extrémité (22), éventuellement conjointement avec l'unité/les unités d'amenée transversale et/ou en hauteur, peut être avancée dans la direction longitudinale.

13. Dispositif d'accouplement selon la revendication 11 ou 12, **caractérisé en ce que** des capteur de position (36, 37, 38) sont prévus sur la région d'extrémité pour déterminer la position transversale et la hauteur, qui coopèrent en particulier avec une commande d'amenée.

14. Dispositif d'accouplement selon la revendication 11, 12 ou 13, **caractérisé en ce que** le connecteur enfichable (30) est relié fonctionnellement à un entraînement indépendant, en particulier pour l'amenée de manière parallèle à la direction d'amenée transversale, de sorte que la connexion enfichable, peut s'effectuer de façon indépendante, en particulier pendant ou après l'établissement de la liaison des parties d'accouplement (26, 28).
